# EUROPÄISCHE PATENTSCHRIFT

(11) **EP 0 847 031 B1**
(45) Veröffentlichungstag und Bekanntmachung des Hinweises auf die Patenterteilung: **10.09.2003**
(21) Anmeldenummer: 97119367.7
(22) Anmeldetag: 05.11.1997
(51) Int. Cl.: G07F 7/10

(54) **Verfahren zum gesicherten nachträglichen Programmieren einer Mikroprozessorkarte für eine zusätzliche Anwendung**
Method for secure further programming of a microprocessor card for an additional application
Méthode pour la sécurisation de programmation ultérieure d'une carte à microprocesseur pour une application additionnelle

(30) Priorität: 05.12.1996 DE 19650549
(43) Veröffentlichungstag der Anmeldung: 10.06.1998
(73) Patentinhaber: Gemplus GmbH, 70794 Filderstadt (DE)
(72) Erfinder: Lohmer, Reinhard, 83052 Bruckmühl (DE); Ness, Werner, 85716 Unterschleissheim (DE); Muth, Ralf-Jürgen, 83620 Feldkirchen-Westerham (DE)
(74) Vertreter: Grünecker, Kinkeldey, Stockmair & Schwanhäusser Anwaltssozietät

(56) Entgegenhaltungen:
- EP-A- 0 707 290
- WO-A-93/20538
- FR-A- 2 536 928
- FR-A- 2 681 165
- US-A- 4 382 279
- US-A- 4 855 578

## Beschreibung

Die vorliegende Erfindung betrifft ein Verfahren zum gesicherten nachträglichen Programmieren einer Mikroprozessorkarte für eine zusätzliche Anwendung.

Ein Hauptanwendungsgebiet für moderne Mikroprpzessorkarten liegt im Bankenbereich, wobei hier insbesondere Anwendungen zum Durchführen von Geldtransaktionen als auch zur Verwendung als elektronische Börse eine Rolle spielen.

Mikroprozessorkarten weisen neben einer CPU, einem RAM und einem ROM üblicherweise einen zusätzlichen Datenspeicher, vorzugsweise ein EEPROM, auf, das im Rahmen der Personalisierung der Karte anwendungsspezifisch beschrieben wird. Dieser spezielle Speicherbereich ist üblicherweise so groß bemessen, daß nach der Konfigurierung der Karte für die Hauptanwendung noch Platz für weitere Anwendungen verbleibt.

Derartige weitere Anwendungen können beispielsweise in der Verwendung der Karte als Identifikationsmittel (elektronischer Fahrschein) im öffentlichen Beförderungsverkehr, als Träger von speziellen Kundendaten für Handelsketten (z.B. Bonussysteme) etc. liegen.

Die EP-A-0 707 290 zeigt eine Vorrichtung zur Übertragung von Programmcode, Daten etc. von einem Modul über ein Terminal zu einem zweiten Modul. Das erste Modul wird in das Terminal gesteckt, wonach ein beliebiges Datensegment in den Speicher des Terminal eingelesen wird. Danach wird das Modul entfernt und das zweite (Ziel-)Modul eingesteckt. Die Daten aus dem Terminalspeicher werden nun in dieses Modul kopiert.

Um eine Mikroprozessorkarte, die originär für den Bankenbereich ausgegeben wurde, auch für derartige zusätzliche Anwendungen benutzen zu können, ist eine entsprechende Konfigurierung der Karte erforderlich. Hierzu wurde bereits vorgeschlagen, den erwähnten freien Speicherbereich bereits bei der ursprünglichen Programmierung der Karte für eine Anzahl zusätzlicher Anwendungen aufzuteilen, und bereits die für die Anwendungen notwendigen Datenstrukturen anzulegen. Um die entsprechende Karte später für eine derartige Anwendung verwenden zu können, ist noch ein "Freischalten" des entsprechend vorkonfigurierten Bereiches auf der Karte notwendig, was beispielsweise durch eine Schlüsselabfrage erfolgen kann.

Nachteilig an dieser bekannten Vorgehensweise ist die unflexible Aufteilung des für die zusätzlichen Anwendüngen zur Verfügung stehenden Speicherbereiches, wodurch sich keine anwendungsspezifische optimale Aufteilung und somit optimale Benutzung des zur Verfügung stehenden Speicherplatzes erreichen laßt.

Es ist die Aufgabe der vorliegenden Erfindung, ein Verfahren anzugeben, mit dem Mikroprozessorkarten in flexibler und abgesicherter Weise nach ihrer Ausgabe an die Kunden für zusätzliche Anwendungen auch von Dritten konfiguriert werden können.

Diese Aufgabe wird durch den Gegenstand des Patentanspruches 1 gelöst.

Bevorzugte Ausgestaltungen der Erfindung sind Gegenstand der Unteransprüche.

Die vorliegende Erfindung baut auf der Erkenntnis auf, daß es nachteilhaft ist, den auf einer Mikroprozessorkarte für zusätzliche Anwendungen zur Verfügung stehenden freien Speicherplatz bereits während der ursprünglichen Initialisierung oder Personalisierung der Karte in vorbestimmte Felder aufzuteilen, unter Umständen bereits mit bestimmten Datenstrukturen zu beschreiben und die entsprechend vorkonfigurierten Bereiche später einzelnen Anwendungen zuzuweisen.

Gemäß der vorliegenden Erfindung ist eine Vorstrukturierung des freien Speicherbereiches nicht erforderlich, die Anpassung der Mikroprozessorkarte an eine zusätzliche Anwendung kann nachträglich noch zu dem Zeitpunkt erfolgen, zu dem entschieden wird, daß die Karte für eine zusätzliche Anwendung verwendet werden soll.

Im folgenden wird eine bevorzugte Ausführungsform des erfindungsgemäßen Verfahrens beschrieben.

In einen Speicherbereich der Mikroprozessorkarte, die beispielsweise von einem Kreditinstitut ausgegeben wird, wird während der ursprünglichen Personalisierung oder Initialisierung ein Schlüssel K eingeschrieben, der vorzugsweise, aber nicht notwendigerweise, allen Karten, die von dem entsprechenden Kreditinstitut ausgegeben werden, gemeinsam ist. Die fertig personalisierte Karte weist bei ihrer Ausgabe an den Kunden innerhalb eines beschreibbaren Speichers, vorzugsweise eines EEPROMS, einen für zusätzliche Anwendungen geeigneten freien Speicherbereich auf, der zum gegenwärtigen Entwicklungsstand beispielsweise einige Kilobyte groß sein kann, bei zukünftigen Chipgenerationen jedoch auch erheblich größer ausfallen kann.

Entschließt sich der Kunde zu einem späteren Zeitpunkt, die Mikroprozessorkarte für eine weitere Anwendung zu verwenden, beispielsweise als Zahlungsmittel für ein Transportunternehmen oder eine Handelskette, so kann er die Karte bei einer geeigneten Stelle, vorzugsweise bei dem Unternehmen selbst, auf das die Anwendung zugeschnitten ist, entsprechend nachprogrammieren lassen.

Die entsprechende Stelle verfügt über einen Datenträger, auf dem eine Befehlssequenz gespeichert ist, mittels der der Mikroprozessor veranlaßt werden kann, in einem geeigneten Teil des freien Speicherbereiches Datenstrukturen anzulegen, durch die die Mikroprozessorkarte für die entsprechende zusätzliche Anwendung konfiguriert wird.

Die auf den Datenträger der entsprechenden Stelle vorhandene Befehlssequenz muß somit an den Mikroprozessor der Karte übertragen werden, damit der Mikroprozessor die entsprechende Konfigurierung vornimmt. Aus Sicherheitsgründen muß die entsprechende Programmsequenz auf geeignete Weise abgesichert, z.B. verschlüsselt zur Mikroprozessorkarte übertragen werden, wobei die Mikroprozessorkarte mittels dem vorgespeicherten Schlüssel K in der Lage ist, die Befehlssequenz zu entschlüsseln.

Darüber hinaus erfolgt vorzugsweise vor der eigentlichen Datenübertragung eine Authentisierung, bei der festgestellt wird, ob die entsprechende Stelle berechtigt ist, eine Umprogrammierung der Mikroprozessorkarte durchzuführen und/oder bei der festgestellt wird, ob die Mikroprozessorkarte berechtigt ist, entsprechend umprogrammiert zu werden. Vorzugsweise erfolgt die Authentisierung entsprechend bekannter Verfahren unter Einbeziehung des in der Mikroprozessorkarte für die Entschlüsselung abgelegten Schlüssels K.

Die Übertragung der Befehlssequenz von dem bei der erwähnten Stelle vorhandenen Datenträger zur Mikroprozessorkarte hin erfolgt vorzugsweise unter Zwischenschaltung eines geeigneten Terminals, in das die nachzukonfigurierende Mikroprozessorkarte eingesteckt wird. Vorzugsweise besteht der Datenträger, auf dem die Befehlssequenz gespeichert ist, ebenfalls aus einer Mikroprozessorkarte und enthält die Befehlssequenz bereits in verschlüsselter Form. Somit ist denkbar, daß Filialen einer bestimmten Handelskette jeweils im Besitz einer derartigen "Trägerkarte" sind und durch die auf der Trägerkarte verschlüsselt gespeicherte Befehlssequenz mittels eines geeigneten Terminals auf eine entsprechende Mikroprozessorkarte übertragen wird. Ein entsprechend geeignetes Gerät könnte somit sowohl einen Aufnahmebereich für die Trägerkarte als auch einen Aufnahmebereich für die Kundenkarte haben und die Kommunikation zur Durchführung der Authentisierung sowie zur Übertragung der auf der Trägerkarte verschlüsselt abgelegten Befehlssequenz zur Kundenkarte hin unterstützen.

Da gemäß der bevorzugten Ausführungsform die Befehlssequenz bereits verschlüsselt auf der Trägerkarte gespeichert ist, ist selbst bei manipulativem Eingriff in das die Kommunikation herstellenden Terminal eine Betrugsmöglichkeit weitgehend ausgeschlossen, da eine Entschlüsselung der von der Trägerkarte gelieferten Daten sowie ein Zugriff auf die zu programmierende Mikroprozessorkarte nur bei Kenntnis des entsprechenden Schlüssels K möglich ist.

Selbstverständlich muß der Datenträger, der die verschlüsselte Befehlssequenz für die Umprogrammierung enthält, nicht an jeder Stelle, an der die Umprogrammierung der Mikroprozessorkarten möglich ist, körperlich vorhanden sein; die entsprechenden Daten können selbstverständlich auch beispielsweise über eine Modemverbindung von einer zentralen Stelle zu den einzelnen Stellen übertragen werden.

Was oben als Befehlssequenz bezeichnet wurde, kann selbstverständlich nicht nur die eigentlichen Befehle, die der Mikroprozessor für die entsprechende Konfigurierung benötigt, umfassen, sondern auch alle Daten, die für die bestimmte Anwendung erforderlich sind. Derartige Daten können beispielsweise ein Geldguthabendaten, Schlüssel für die Durchführung von Authentisierungsverfahren im Rahmen der zusätzlichen Anwendungen etc. umfassen.

Gemäß der vorliegenden Erfindung werden die Daten gesichert von dem Datenträger bzw. der Trägerkarte zu der zu programmierenden Mikroprozessorkarte übertragen. Die Sicherung erfolgt dabei derart, daß eine Endsicherung innerhalb der zu programmierenden Mikroprozessorkarte mittels eines gespeicherten Schlüssels K möglich ist. Zur Sicherung können nicht nur die üblichen Verschlüsselungsverfahren verwendet werden, sondern auch alle gängigen kryptographischen Verfahren wie beispielsweise elektronische Signatur etc.

Insoweit der Ausdruck "Programmieren" verwendet wurde, soll dieser nicht daraufhin beschränkt verstanden werden, daß eine Programmierung auf Maschinensprachenebene erfolgt. Vielmehr und bevorzugterweise wird die Mikroprozessorkarte mittels höherer Befehle zur Durchführung der Neukonfiguration angesprochen, vorzugsweise mittels Befehlen die durch das Betriebssystem des entsprechenden Mikroprozessors bereitgestellt werden. Die als Befehlssequenz bezeichneten Daten müssen dabei nicht notwendigerweise von dem Mikroprozessor direkt ausführbare Befehlscodes aufweisen, vielmehr besteht die Befehlsequenz allgemein ausgedrückt aus Information, durch die der Mikroprozessor veranlaßt wird, die entsprechende Umkonfiguration vorzunehmen.

Gemäß dem vorliegenden Verfahren kann der auf einer Mikroprozessorkarte für zusätzliche Anwendungen anfänglich zur Verfügung stehende Speicherbereich bytegenau unter beliebigen Anwendungen aufgeteilt werden. Eine Unterteilung des Bereiches in starre Felder, die anschließend u.U. nur unvollständig genutzt werden, wird somit vermieden.

Da mit Hilfe des vorliegenden Verfahrens alle Möglichkeiten des programmierbaren Mikroprozessors genutzt werden können, besteht zusätzlich die Möglichkeit, die Strukturierung der Daten exakt nach den Bedürfnissen der Anwendung durchzuführen bzw. sogar zusätzlichen Programmcode in die Karte einzubringen, der es gestattet, das Verhalten des Mikroprozessors optimal an die neue Anwendung anzupassen.

Gegenüber den bisher bekannten Verfahren weist das vorliegende Verfahren den Vorteil auf, daß die an den Mikroprozessor übermittelte Information nicht mißbräuchlich verwendet werden kann, daß zur Verwendung der übermittelten Information keinerlei Wissen über die bereits auf der Karte gespeicherten Daten benötigt wird, daß die zur Mikroprozessorkarte übermittelte Information nicht manipuliert werden kann bzw. eine Manipulation sicher erkannt wird und schließlich daß die übermittelte Information nur für die dafür vorgesehenen Karten verwendbar ist, da eine Verwendung der übermittelten Information das Vorhandensein des Schlüssels K auf der Karte bedingt.

## Patentansprüche

1. Verfahren zum gesicherten nachträglichen Programmieren einer Mikroprozessorkarte für ein zusätzliche Anwendung, mit folgenden Schritten:
Speichern eines Schlüssels K in einem Speicher der nachträglich zu programmierenden Mikroprozessorkarte,
Erstellen einer Befehlssequenz, mittels der die Mikroprozessorkarte für die zusätzliche Anwendung konfigurierbar ist,
Speichern der verschlüsselten Befehlssequenz auf einem Datenträger, vorzugsweise einer weiteren Mikrpprözessorkarte,
Einrichten einer Datenkommunikation zwischen der nachträglich zu programmierenden Mikroprozessorkarte und dem Datenträger bzw. der weiteren Mikroprozessorkarte,
Durchführen eines Authentisierungsverfahrens zum Überprüfen, ob die nachträglich zu programmierende Mikroprozessorkarte für die nachträgliche Programmierung zugelassen ist,
und/oder ob der Datenträger bzw. die zusätzliche Mikroprozessorkarte für die nachträgliche Programmierung zugelassen ist,
bei erfolgreichem Abschluß der Authentisierung schrittweises oder vollständiges Übertragene der Befehlssequenz in gesicherter Form von dem Datenträger bzw. der weiteren Mikroprozessorkarte an die nachträglich zu programmierende Mikroprozessorkarte,
Entsichern der empfangenen, gesicherten Befehlssequenz bzw. Befehlssequenzteile durch den Mikroprozessor der zu programmierenden Mikroprozessorkarte mittels des gespeicherten Schlüssels K,
Anlegen von Daten und/oder Programmstrukturen innerhalb eines freien Speicherbereiches der nachträglich zu programmierenden Mikroprozessorkarte entsprechend der Befehlssequenz, wodurch die Mikroprozessorkarte für die zusätzliche Anwendung konfiguriert wird.

2. Verfahren nach Anspruch 1, **dadurch gekennzeichnet, daß** die Befehlssequenz bereits in gesicherter Form auf dem Datenträger bzw. der weiteren Mikroprozessorkarte gespeichert wird, derart, daß eine Entsicherung mittels des Schlüssels K möglich ist.

3. Verfahren nach Anspruch 1 oder 2, **dadurch gekennzeichnet, daß** die Sicherung mittels kryptographischer Verfahren erfolgt, vorzugsweise mittels geeigneter Verschlüsselungsverfahren.

4. Verfahren nach einem der Ansprüche 1 bis 3, **dadurch gekennzeichnet, daß** in das Authentisierungsverfahren ebenfalls der Schlüssel K einbezogen ist.

5. Verfahren nach einem der Ansprüche 1 bis 4, **dadurch gekennzeichnet, daß** der Schlüssel K während der ersten Personalisierung der Karte gespeichert wird.

6. Verfahren nach einem der vorhergehenden Ansprüche, **dadurch gekennzeichnet, daß** die nachträgliche Programmierung in einem Terminal durchgeführt wird, in das sowohl die zu programmierende Mikroprozessorkarte als auch die weitere Mikroprozessorkarte eingesteckt werden und das die Datenkommunikation zwischen den Karten ermöglicht.

7. Verfahren nach einem der vorhergehenden Ansprüche, **dadurch gekennzeichnet, daß** die verschlüsselte Befehlssequenz die für die entsprechende Anwendung notwendigen Daten enthält.

## Claims

1. Method for secure further programming of a microprocessor card for an additional application, comprising the following steps:
storing a key K in a memory of the microprocessor card to be further programmed,
creating a command sequence by means of which the microprocessor card may be configured for the additional application,
storing the encrypted command sequence on a data carrier, preferably a further microprocessor card,
establishing data communication between the microprocessor card to be further programmed and the data carrier or the further microprocessor card,
performing an authentication process to verify whether the microprocessor card to be further programmed is authorised for further programming and/or whether the data carrier or additional microprocessor card is authorised for further programming,
in case of successful completion of authentication, transferring the command sequence stepwise or as a whole in a secure form from the data carrier or further microprocessor card to the microprocessor card to be further programmed,
decrypting the received secure command sequence or command sequence parts by means of the microprocessor of the microprocessor card to be programmed by means of the stored key K,
placing data and/or program structures in a free memory area of the microprocessor card to be further programmed in accordance with the command sequence, as a result of which the microprocessor card will be configured for the additional application.

2. Method as claimed in Claim 1, **characterized in that** the command sequence is already stored in a secure form on the data carrier or further microprocessor card in such a way that it can be decrypted by means of key K.

3. Method as claimed in Claim 1 or 2, **characterized in that** encryption is carried out by means of cryptographic processes, preferably by means of suitable encryption processes.

4. Method as claimed in any one of Claims 1 to 3, **characterized in that** the authentication process also involves the key K.

5. Method as claimed in any one of Claims 1 to 4, **characterized in that** the key K is stored during initial personalization of the card.

6. Method as claimed in any one of the preceding claims, **characterized in that** the further programming is carried out at a terminal, into which both the microprocessor card to be programmed and the further microprocessor card are inserted and which enables data communication between those cards.

7. Method as claimed in any one of the preceding claims, **characterized in that** the encrypted command sequence includes the data necessary for the corresponding application.

## Revendications

1. Procédé pour la programmation ultérieure sécurisée d'une carte à microprocesseur pour une application supplémentaire, comportant les étapes suivantes :
mémorisation d'un code K dans une mémoire de la carte à microprocesseur à programmer ultérieurement,
élaboration d'une séquence d'instructions, au moyen de laquelle la carte à microprocesseur peut être configurée pour l'application supplémentaire,
mémorisation de la séquence d'instructions codées sur un support de données, de préférence une autre carte à microprocesseur,
établissement d'une communication de données entre la carte à microprocesseur à programmer ultérieurement et le support de données ou l'autre carte à microprocesseur,
application d'un procédé d'authentification pour vérifier si la carte à microprocesseur à programmer ultérieurement est agréée pour la programmation ultérieure,
et/ou si le support de données ou la carte à microprocesseur supplémentaire est agréé pour la programmation ultérieure,
après l'exécution réussie de l'authentification, transmission par étape ou complète de la séquence d'instructions sous forme sécurisée du support de données ou de l'autre carte à microprocesseur à la carte à microprocesseur à programmer ultérieurement,
déverrouillage de la séquence d'instructions sécurisée et reçue ou de parties de la séquence d'instructions par le microprocesseur de la carte à microprocesseur à programmer au moyen du code K mémorisé,
mise en place de données et/ou de structures de programme à l'intérieur d'une zone de mémoire libre de la carte à microprocesseur à programmer ultérieurement en fonction de la séquence d'instructions, de sorte que la carte à microprocesseur est configurée pour l'application supplémentaire.

2. Procédé selon la revendication 1, **caractérisé en ce que** la séquence d'instructions est mémorisée déjà sous une forme sécurisée sur le support de données ou l'autre carte à microprocesseur, de telle sorte qu'un déblocage est possible au moyen du code K.

3. Procédé selon la revendication 1 ou 2, **caractérisé en ce que** la sécurisation s'effectue au moyen de procédés cryptographiques, de préférence au moyen de procédés de codage appropriés.

4. Procédé selon l'une quelconque des revendications 1 à 3, **caractérisé en ce qu'**également le code K est intégré dans le procédé d'authentification.

5. Procédé selon l'une quelconque des revendications 1 à 4, **caractérisé en ce que** le code K est mémorisé pendant la première personnalisation de la carte.

6. Procédé selon l'une quelconque des revendications précédentes, **caractérisé en ce que** la programmation ultérieure est effectuée dans un terminal, dans lequel aussi bien la carte à microprocesseur à programmer que l'autre carte à microprocesseur sont enfichées et qui permet la communication de données entre les cartes.

7. Procédé selon l'une quelconque des revendications précédentes, **caractérisé en ce que** la séquence d'instructions codée contient les données nécessaires pour l'application correspondante.
